# EUROPEAN PATENT SPECIFICATION

(11) **EP 4 443 772 B1**
(45) Date of publication and mention of the grant of the patent: **01.04.2026**
(21) Application number: 22897948.0
(22) Date of filing: 25.11.2022
(51) Int. Cl.: H04B 10/70, H04L 9/08, H04B 10/61, H04B 10/548, H04L 9/00

(54) **TF-QKD SYSTEM AND METHOD**
TF-QKD-SYSTEM UND VERFAHREN
SYSTÈME TF-QKD ET PROCÉDÉ

(30) Priority: 29.11.2021 CN 202111455471
(43) Date of publication of application: 09.10.2024
(73) Proprietor: Quantumctek Co., Ltd., Hefei, Anhui 230088 (CN)
(72) Inventor: TANG, Yanlin, Hefei, Anhui 230088 (CN); TANG, Shibiao, Hefei, Anhui 230088 (CN); XU, Mulan, Hefei, Anhui 230088 (CN); ZHAO, Meisheng, Hefei, Anhui 230088 (CN)
(74) Representative: Detken, Andreas
(86) International application number: PCT/CN2022/134500
(87) International publication number: WO 2023/093867

(56) References cited:
- CN-A- 109 379 188
- CN-A- 110 896 328
- CN-A- 112 929 161
- CN-U- 216 531 333
- CN-U- 216 531 333
- PITTALUGA MIRKO ET AL: "600-km repeater-like quantum communications with dual-band stabilization", NATURE PHOTONICS, NATURE PUBLISHING GROUP UK, LONDON, vol. 15, no. 7, 7 June 2021 (2021-06-07), pages 530 - 535, XP037496333, ISSN: 1749-4885, [retrieved on 20210607], DOI: 10.1038/S41566-021-00811-0
- WEI YADONG, TANG ZHI-LIE, LIU XIAO-BAO, LIAO CHANG-JUN, LIU SONG-HAO: "Study on Sending after Verify Scheme in Quantum Channel for Quantum Key Distribution System Based on Polarization Coding", ACTA PHOTONICA SINICA, SCIENCE PRESS, BEIJING., CN, vol. 38, no. 7, 15 July 2009 (2009-07-15), CN , pages 1852 - 1857, XP093068029, ISSN: 1004-4213

## Description

The present application claims priority to Chinese Patent Application No. 202111455471.8, titled "TF-QKD SYSTEM AND METHOD", filed on November 29, 2021 with the China National Intellectual Property Administration.

### FIELD

The present disclosure relates to the field of quantum secure communication, and in particular to a TF-QKD system and a TF-QKD method, allowing stably implementing consistent polarization coupling.

### BACKGROUND/

Security of an ideal BB84 QKD protocol is based on some fundamental assumptions. If a real device cannot completely satisfy these assumptions, a security vulnerability will occur. For example, the ideal BB84 QKD protocol applies a single-photon source to ensure communication security based on the no-cloning theorem. However, a true single-photon source cannot be obtained in reality. The decoy state quantum key distribution (QKD) protocol provided in 2005 applies a low-coherent light source instead of the single-photon source, to solve the problem of imperfect light source in a real device. A detection system is the most vulnerable part in implementation of QKD. Quantities of attacks are against the security vulnerability of the detector-side device, including typical blinding attacks by bright light, time-shifting attacks and the like. In order to resist the detector-side attacks, in addition to using a security patch method and including modeled device parameters in the security proof, another method is to apply measurement device independent QKD (MDI-QKD). First proposed by H-K Lo group in 2012, the measurement device independent quantum key distribution protocol (original MDI-QKD protocol) based on an entanglement exchange technology and time reversal and EPR solutions can eliminate all detector-side channels. Further, in 2018, a research team of A. J. Shields of Toshiba European research center proposed a two-field quantum key distribution protocol (TF-QKD protocol). The TF-QKD protocol inherits the measurement device independent security of MDI-QKD and has a longer security distance, receiving wide attention at home and abroad.

TF-QKD protocol is different from the original MDI-QKD protocol, a main technical difficulty of the TF-QKD protocol is to implement high contrast interference between two independent laser sources and fast monitoring of a global phase difference simultaneously, and no phase post-selection QKD (NPP-QKD) further needs to perform fast phase feedback compensation. A control requirement of the optical path difference corresponding to the global phase difference herein is in an order of sub-wavelength. Not only a difference caused by the frequency difference and wavelength difference between a light source at an Alice terminal and a light source at a Bob light source, but also a phase perturbation introduced from a quantum optical transmission channel contribute to the phase difference, where the phase perturbation changes drastically in an order of 10rad/ms and needs to be fast monitored.

There are generally two ways to fast monitor the channel phase perturbation in conventional technology. In the first way, fast time division multiplexing is performed on a signal light, where part of the light serves as a phase reference light to monitor and estimate a fast relative phase drift of an optical fiber. In the second way, wavelength division multiplexing is performed on reference lights of different wavelengths, and the phase perturbation of the reference light is monitored to represent the phase perturbation of the signal light. In this case, the power of the reference light may be increased to support a higher accuracy and a higher distance of phase perturbation monitoring.

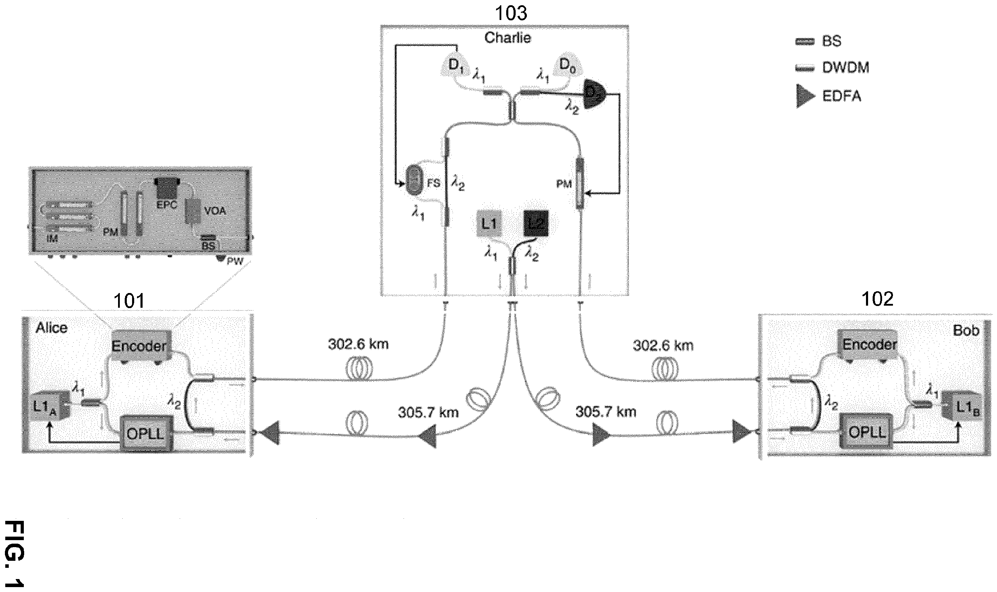

Figure 1 shows a conventional solution for fast monitoring of channel phase perturbation by the wavelength division multiplexing technology, where the wavelength division multiplexing is performed on a frequency-locked light L1 (with a wavelength of λ1) and a phase reference light L2 (with a wavelength of λ2) at the Charlie terminal, for transmission to the Alice terminal (another beam is transmitted to the Bob terminal through the beam splitter) through one optical fiber channel. L1 and L2 are wavelength division de-multiplexed at the Alice (Bob) terminal, and the L1A (L1B) signal light locally at the Alice (Bob) terminal is frequency-locked and phase-locked, so that the signal light L1A (L1B) is phase-associated with L1. At a sender, L2 and L1A(L1B) are wavelength-division-multiplexed, for transmission to the Charlie terminal through one optical fiber. The Charlie terminal performs interference on both the signal light and the reference light, and performs wavelength division de-multiplexing to obtain an interference signal of the reference light for transmission to detector D2 and obtain an interference signal of the signal light for transmission to detector D0 and detector D1.

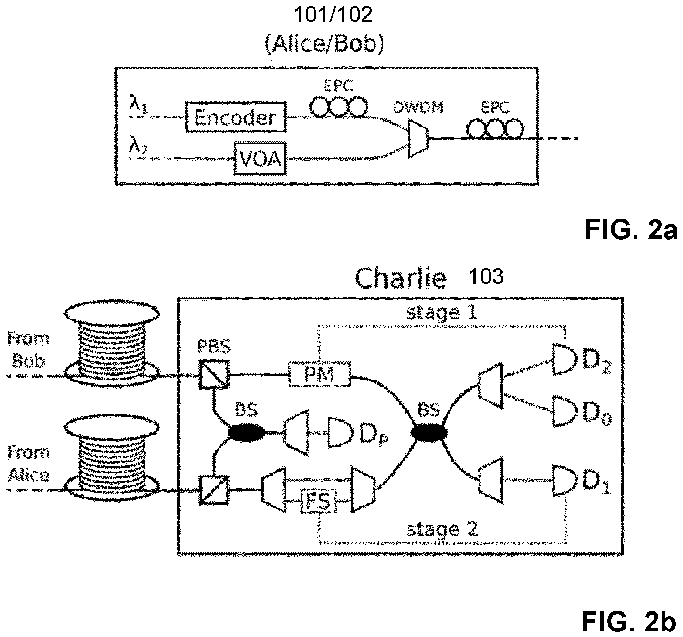

In this solution, the consistent polarization coupling and polarization compensation of the signal light and the reference light are required, where the signal light and the reference light have different wavelengths. Figure 2a and Figure 2b are structural diagrams of an optical path structure for implementing consistent polarization coupling and polarization compensation according to the conventional technology. As shown in Figure 2a, polarization of L1A (with a wavelength of λ1) at the sender is regulated through a first EPC to have a same polarization as L2 (with a wavelength of λ2) when being coupled with L2, so as to implement consistent polarization coupling. After that, polarization pre-compensation is implemented by a second EPC at the sender. In this case, as shown in Figure 2b, the Charlie terminal is provided with a polarization beam splitter PBS in each of two arms (corresponding to lights from the Alice terminal and the Bob terminal respectively), and the reflection terminals of the PBSs are coupled into a Dp detector. The count of the Dp detector will be sent to the Alice terminal and the Bob terminal alternately through a classical network for alternating polarization feedback to control the second EPC of the Alice terminal and the Bob terminal and implement the polarization compensation.

For example, in the implementation structure shown in Figure 2a and Figure 2b, the optical path of the consistent polarization coupling and polarization compensation at the sender is complex, high-cost, difficult to implement, and has a poor stability which requires manual calibration. Specifically, the sender is provided with two EPCs, and high-voltage control circuits for the two EPCs are required, which increases the electronics complexity and the cost of the sender. In a case that the sender is affected by environmental change such as temperature and vibration, the polarization state of L1A or L2 inside the sender will further change, resulting in that the polarization states of coupled L1A and L2 are not completely consistent, and ultimately the polarization states of the two optical signals at the Charlie terminal are inconsistent as well. Therefore, the polarization feedback solution based on the Dp detector cannot render the polarization states of the two different wavelengths to a consistent state (for example, a maximum polarization extinction ratio state) at the same time. Therefore, the solution further requires manual calibration when affected by environmental perturbation, which is not conducive to industrial production and automation operation of the device.

In addition, in the conventional technology, L1 and L2 are wavelength-division-multiplexed at the Charlie terminal, and are sent to Alice terminal through the same fiber channel, no polarization compensation is performed after the L1 and L2 reaches the Alice terminal, causing the system performance to be unstable. On the one hand, the polarization perturbation of the fiber channel will cause the polarization of L2 to change, resulting in a similar result as the above: the polarization states of the coupled L1 and L2 are not completely consistent, and ultimately the polarization states of the two optical signals at the Charlie terminal are inconsistent as well. On the other hand, the polarization of L1 also changes, resulting in changes to the frequency locking effect of post frequency locking of an OPLL). In the worst case, the OPLL may lose lock completely when the polarization changes excessively.

### SUMMARY

In view of the above problems in conventional technology, for example, the optical path of the consistent polarization coupling solution is complex, high-cost, difficult to be implemented, and has a poor stability which requires manual calibration in combination, or a polarization state of the frequency-locked light is unstable, which leads to the unstable frequency locking effect, a TF-QKD system and a method for stably implementing TF-QKD are provided according to the present disclosure. At a Charlie terminal, a frequency-locking reference light and a phase reference light are wavelength-division-coupled in a polarization-maintaining manner to form a reference light signal, so that at an Alice terminal and a Bob terminal, combined with the frequency-locking technology, two polarization-maintaining wavelength division multiplexers cooperate to implement the wavelength division coupling with a consistent polarization of the quantum optical signal and the phase reference light without EPC or manual intervention, so as to ensure stability of consistent polarization coupling with a simple optical path. In addition, at the Alice terminal and the Bob terminal, the polarization of the reference light signal is compensated, to ensure the stability of the frequency-locked reference light and the phase reference light by means of the consistent polarization coupling module according to the present disclosure, thereby ensuring the stability of the frequency-locking effect.

In a first aspect of the present disclosure, a TF-QKD system is provided, including an Alice terminal, a Bob terminal and a Charlie terminal.

The Charlie terminal includes a measurement module, a first wavelength division multiplexer and a first beam-splitting module.

The first wavelength division multiplexer is configured to perform wavelength division coupling on a frequency-locking reference light and a phase reference light in a polarization-maintaining manner to form a combined reference light, where the frequency-locking reference light and the phase reference light have different wavelengths.

The first beam-splitting module is configured to split the combined reference light to form two components of combined reference light.

The Alice terminal is configured to receive one of the two components of combined reference light, and send a first combined signal light to the Charlie terminal. The Alice terminal includes a first frequency-locked light source, a first quantum state preparation module and a first consistent polarization coupling module.

The first consistent polarization coupling module is configured to de-multiplex the frequency-locking reference light and the phase reference light in the component of combined reference light, output the frequency-locking reference light to the first frequency-locked light source in a polarization-maintaining manner, and perform wavelength division coupling on a first quantum optical signal and the phase reference light in a polarization-maintaining manner to form the first combined signal light.

The first frequency-locked light source is configured to generate a first optical signal in a frequency-locking manner by using the frequency-locking reference light.

The first quantum state preparation module is configured to prepare a quantum state on the first optical signal to generate the first quantum optical signal.

The Bob terminal is configured to receive another one of the two components of combined reference light, and send a second combined signal light to the Charlie terminal. The Bob terminal includes a second frequency-locked light source, a second quantum state preparation module and a second consistent polarization coupling module.

The second consistent polarization coupling module is configured to de-multiplex the frequency-locking reference light and the phase reference light in the component of combined reference light, output the frequency-locking reference light to the second frequency-locked light source in a polarization-maintaining manner, and perform wavelength division coupling on a second quantum optical signal and the phase reference light in a polarization-maintaining manner to form the second combined signal light.

The second frequency-locked light source is configured to generate a second optical signal in a frequency-locking manner by using the frequency-locking reference light.

The second quantum state preparation module is configured to prepare a quantum state on the second optical signal to generate the second quantum optical signal.

The measurement module is configured to measure an interference signal of the first and second quantum optical signals.

Further, the consistent polarization coupling module includes two polarization-maintaining wavelength division multiplexers.

One of the polarization-maintaining wavelength division multiplexers is configured to de-multiplex the frequency-locking reference light and the phase reference light in the component of combined reference light, and output the frequency-locking reference light and the phase reference light respectively to the frequency-locked light source and another one of the two polarization-maintaining wavelength division multiplexers in a polarization-maintaining manner.

The other one of the polarization-maintaining wavelength division multiplexers is configured to perform the wavelength division coupling on the phase reference light and the quantum optical signal in a polarization-maintaining manner to generate the combined signal light.

Further, at least one of the Alice terminal and the Bob terminal further includes a polarization monitoring and compensation module arranged before the consistent polarization coupling module and configured to compensate a polarization state of the combined reference light to cause the combined reference light to be in a preset polarization state. The polarization monitoring and compensation module may include a polarization controller, a polarization beam splitter and a photoelectric detector.

Further, the TF-QKD system according to the present disclosure may further include two polarization monitoring and compensation modules respectively configured to compensate polarization states of the first and the second combined signal lights.

Further, a first one of the two polarization monitoring and compensation modules includes a polarization controller, a polarization beam splitter and a photoelectric detector, where the polarization controller is arranged at the Alice terminal or the Charlie terminal, and the polarization beam splitter and the photoelectric detector are arranged at the Charlie terminal.

A second one of the two polarization monitoring and compensation modules includes a polarization controller, a polarization beam splitter and a photoelectric detector, where the polarization controller is arranged at the Bob terminal or the Charlie terminal, and the polarization beam splitter and the photoelectric detector are arranged at the Charlie terminal.

In an embodiment, the two polarization monitoring and compensation modules share the photoelectric detector through a beam splitter.

Further, the Charlie terminal further includes a frequency-locking reference light source for generating the frequency-locking reference light, and a phase reference light source for generating the phase reference light; and/or,
the Charlie terminal further includes a slow phase compensation module and/or a fast phase compensation module, where the slow phase compensation module is configured to compensate a phase perturbation between the quantum optical signal and the phase reference light in the combined signal light, and the fast phase compensation module is configured to compensate a phase perturbation between the first combined signal light and the second combined signal light.

In an embodiment, the frequency-locked light source generates the optical signal by using the frequency-locking reference light based on injection locking, an optical phase-locked loop, or time-frequency dissemination.

In an embodiment, a total number of Alice terminals and Bob terminals is N, where N is a positive integer greater than 1, and the Charlie terminal is further provided with an optical switch supporting a 2:N port for selecting the Alice terminal and/or the Bob terminal to be connected.

In a second aspect of the present disclosure, a method for stably implementing TF-QKD is provided, including following steps:
at a Charlie terminal, performing wavelength division multiplexing on a frequency-locking reference light and a phase reference light by a polarization-maintaining wavelength division multiplexer, to form a combined reference light;
at an Alice terminal and a Bob terminal, de-multiplexing the frequency-locking reference light and the phase reference light in the combined reference light and outputting the frequency-locking reference light to a frequency-locked light source in a polarization-maintaining manner, by a polarization-maintaining wavelength division multiplexer;
at the Alice terminal and the Bob terminal, generating, by the frequency-locked light source, an optical signal in a frequency-locking manner by using the frequency-locking reference light, preparing a quantum optical signal by using the optical signal, and outputting the quantum optical signal in a polarization-maintaining manner;
at the Alice terminal and the Bob terminal, performing, by another polarization-maintaining wavelength division multiplexer, wavelength division coupling on the phase reference light and the quantum optical signal, to form a combined signal light; and
at the Charlie terminal, controlling quantum optical signals respectively from the Alice terminal and the Bob terminal to interfere with one another to generate an interference signal and measuring the interference signal.

Further, the method according to the present disclosure may further include:
at the Alice terminal and Bob terminal, performing polarization compensation on the combined reference light and outputting the combined reference light in a polarization-maintaining manner before de-multiplexing the combined reference light; and/or,
performing polarization compensation on the quantum optical signals and outputting the quantum optical signals in a polarization-maintaining manner before controlling the quantum optical signals to interfere with one another.

Further, the method according to the present disclosure may further include the step of: at the Charlie terminal, performing a slow phase compensation and/or a fast phase compensation on the combined signal light.

In an embodiment, the method according to the present disclosure may be implemented by means of the TF-QKD system described above.

### BRIEF DESCRIPTION OF THE DRAWINGS

The embodiments of the present disclosure are described in detail below in conjunction with the drawings.

In order to clearly illustrate the technical solutions in the embodiments of the present disclosure or the conventional technology, the drawings in the description of the embodiments or the conventional technology will be briefly introduced here. Apparently, the drawings in the following description merely show some embodiments of the present disclosure, those skilled in the art may obtain other drawings based on these drawings without creative efforts.
Figure 1 is a schematic diagram of a TF-QKD system according to the conventional technology;
Figure 2a and Figure 2b show an example of a structure for consistent polarization coupling and polarization compensation in a TF-QKD system according to conventional technology;
Figure 3 shows an example of a TF-QKD system according the present disclosure;
Figure 4 shows an example of a polarization monitoring and compensation module according the present disclosure; and
Figure 5 shows an example of a consistent polarization coupling module according the present disclosure.

### DETAILED DESCRIPTION

Hereinafter, exemplary embodiments of the present disclosure will be described in detail with reference to the drawings. The following embodiments are provided by way of example in order to fully convey the spirit of the present disclosure to those skilled in the art to which the present disclosure relates. Therefore, the present disclosure is not limited to the embodiments disclosed herein.

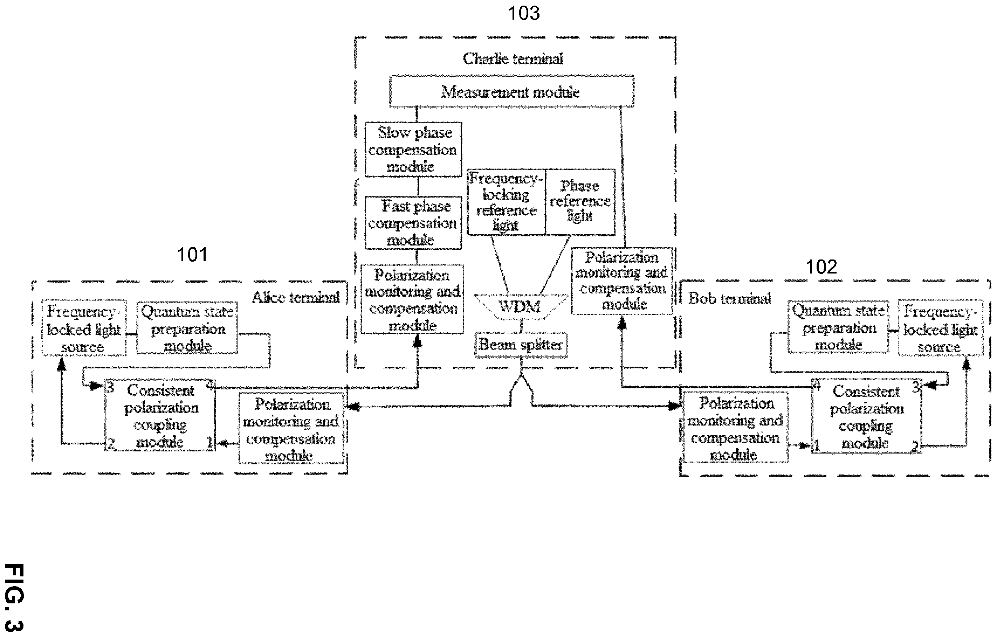

Figure 3 is a schematic diagram of an example of a TF-QKD system according the present disclosure. The TF-QKD system includes an Alice terminal 101, a Bob terminal 102, and a Charlie terminal 103.

The Charlie terminal 103 may include a frequency-locking reference light source, a phase reference light source, a polarization-maintaining first wavelength division multiplexer (WDM), a first beam-splitting module and a measurement module.

The frequency-locking reference light source has a first wavelength and is configured to generate a frequency-locking reference light.

The phase reference light source has a second wavelength and is configured to generate a phase reference light, where the first wavelength is different from the second wavelength.

The first wavelength division multiplexer has a common terminal, a first wavelength terminal, and a second wavelength terminal. The first wavelength terminal is connected to the frequency-locking reference light source, and the second wavelength terminal is connected to the phase reference light source, such that the frequency-locking reference light and phase reference light can be inputted into the first wavelength division multiplexer and form a combined reference light by wavelength division coupling in a polarization-maintaining manner, and the combined reference light is output through the common terminal.

The common terminal of the first wavelength division multiplexer may, for example, be connected to the first beam-splitting module through a single-mode or polarization-maintaining optical fiber. Therefore, the combined reference light can be split into two components of combined reference light through the first beam-splitting module.

As shown in Figure 3, an output terminal of the first beam-splitting module is connected to the Alice terminal 101 through a first single-mode or polarization-maintaining optical fiber channel, to send a component of combined reference light to the Alice terminal 101. Another output terminal of the first beam-splitting module is connected to the Bob terminal 102 through another first single-mode or polarization-maintaining optical fiber channel, to send another component of combined reference light to the Bob terminal 102. For example, the first beam-splitting module may include a beam splitter.

As mentioned above, the polarization state of the component of combined reference light may change when reaching the Alice terminal 101 or Bob terminal 102 through, for example, the first single-mode optical fiber channel. Therefore, the polarization monitoring and compensation module may be arranged at the Alice and Bob terminals 101, 102, which is configured to perform polarization monitoring feedback compensation on the component of combined reference light (whose polarization state is unstable) reaching the Alice and Bob terminals 101, 102, to render the component of combined reference light in a preset polarization state, and output the component of combined reference light with the stable polarization state in a polarization-maintaining manner.

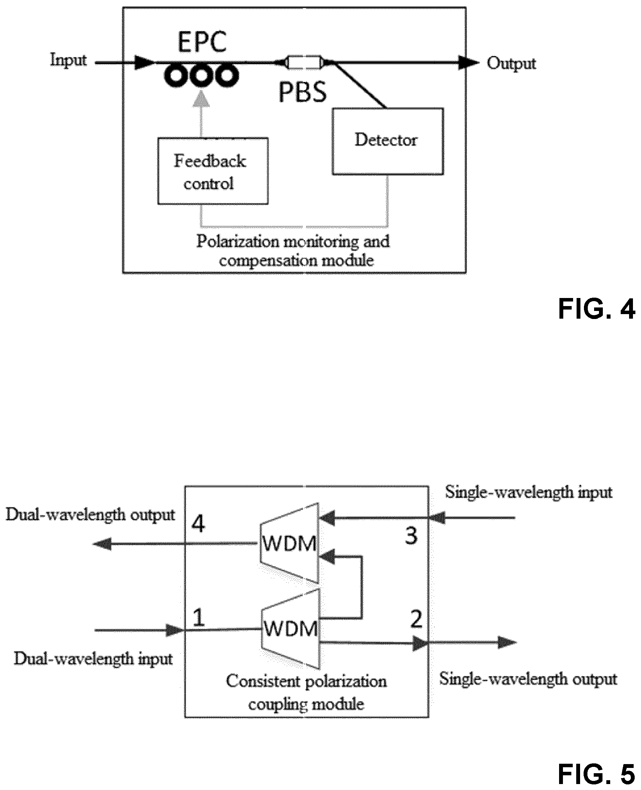

Figure 4 shows an example of a polarization monitoring and compensation module according the present disclosure, which may include a polarization controller, a polarization beam splitter and a photoelectric detector.

The polarization controller is configured to provide polarization compensation for the component of combined reference light. For example, the polarization controller may be an electric polarization controller (EPC).

The polarization beam splitter and photoelectric detector constitute a polarization monitoring part, where the polarization beam splitter is configured to split the component of combined reference light output by the polarization controller. Therefore, part of the split light may be detected by the photoelectric detector to obtain the polarization state of the component of combined reference light, that is, polarization deviation information about the preset polarization state is obtained. Thus, a feedback control signal is generated according to the polarization deviation information, and is provided to the polarization controller to ultimately implement closed-loop feedback control of polarization.

Continuing with reference to Figure 3, the Alice terminal 101 may further include a first frequency-locked light source, a first quantum state preparation module and a first consistent polarization coupling module, and the Bob terminal 102 may include a second frequency-locked light source, a second quantum state preparation module and a second consistent polarization coupling module.

At the Alice terminal 101, the polarization monitoring and compensation module outputs the component of combined reference light with a stable polarization state to the first consistent polarization coupling module, where the first consistent polarization coupling module is configured to provide the frequency-locking reference light to the first frequency-locked light source, and perform wavelength division coupling on the phase reference light and a first quantum optical signal generated at the Alice terminal 101 at a same polarization state, to form a first combined signal light.

Similarly, at the Bob terminal 102, the polarization monitoring and compensation module outputs the component of combined reference light with a stable polarization state to the second consistent polarization coupling module, where the second consistent polarization coupling module is configured to provide the frequency-locking reference light to the second frequency-locked light source, and perform wavelength division coupling on the phase reference light and a second quantum optical signal generated at the Bob terminal 102 at a same polarization state, to form a second combined signal light.

Figure 5 shows an example of a consistent polarization coupling module according the present disclosure.

As shown in Figure 5, the first (second) consistent polarization coupling module may include two polarization-maintaining wavelength division multiplexers, such as a second wavelength division multiplexer and a third wavelength division multiplexer, each of which has a common terminal, a first wavelength terminal, and a second wavelength terminal.

In the second wavelength division multiplexer, the common terminal serves as a dual-wavelength input terminal 1 of the consistent polarization coupling module, and is configured to receive the component of combined reference light, for example, outputted by the polarization monitoring and compensation module in a polarization-maintaining manner. Thus, the frequency-locking reference light and the phase reference light in the component of combined reference light are de-multiplexed. The first wavelength terminal (which serves as a single-wavelength output terminal 2 of the consistent polarization coupling module) outputs the frequency-locking reference light, and the second wavelength terminal outputs the phase reference light.

The frequency-locking reference light enters the first (second) frequency-locked light source after being outputted by the first wavelength terminal. The frequency-locked light source locks its frequency at a first wavelength of the frequency-locking reference light, for example (but not limited to), by an injection locking technology, an optical phase-locked loop (OPLL) technology, a time-frequency dissemination technology and the like, so as to output a first (second) optical signal whose frequency is stabilized at the first wavelength. At this point, those skilled in the art can understand that by compensating the polarization state of the component of combined reference light with the polarization monitoring and compensation module in advance, the component of combined reference light reaching the second wavelength division multiplexer (that is, the consistent polarization coupling module) have a stable polarization state. Thus, the frequency-locking reference light and the phase reference light de-multiplexed and outputted by the second wavelength division multiplexer have a stable light intensity. As the frequency-locking reference light in the frequency-locking process of the frequency-locked light source has a stable light intensity, the frequency-locking effect is stable, allowing the first (second) frequency-locked light source to output the first (second) optical signal stably, with which the first (second) quantum state preparation module generates the first (second) quantum optical signal, where the quantum optical signal has a wavelength consistent with that of the frequency-locking reference light.

In the third wavelength division multiplexer, the first wavelength terminal (which serves as a single-wavelength input terminal 3 of the consistent polarization coupling module) is connected to the first (second) quantum state preparation module in a polarization-maintaining manner, to receive the first (second) quantum optical signal, and the second wavelength terminal is connected to the second wavelength terminal of the second wavelength division multiplexer. Thus, the first (second) quantum optical signal and the phase reference light can be wavelength-division-coupled in a polarization-maintaining manner, and the first (second) combined signal light is output through the common terminal (which serves as a dual-wavelength output terminal 4 of the consistent polarization coupling module). As described above, due to the polarization monitoring and compensation module, the de-multiplexed phase reference light also has a stable light intensity, which is beneficial to outputting a stable combined signal light.

In view of the above, the phase reference light and the frequency-locking reference light are wavelength-division-coupled in a polarization consistent manner by setting the polarization-maintaining first wavelength division multiplexer at the Charlie terminal 103, to form the combined reference light. In addition, the consistent polarization coupling module formed by two polarization-maintaining wavelength division multiplexers is arranged both at the Alice terminal 101 and the Bob terminal 102. In this way, without the participation of EPC and manual intervention, the consistent polarization coupling of the first (second) quantum optical signal and the phase reference light can be implemented at the Alice (Bob) terminal 101, 102 only by the inherent optical characteristics of the optical device itself. The implementation of this polarization consistency are not affected by environmental factors, such as the temperature and vibration at the Alice terminal 101 and the Bob terminal 102, which is more stable in implementation and does not require complex control, effectively reducing system cost and improving system integration and stability. In addition, in conventional solutions having EPC for polarization consistency, only polarization of the quantum optical signal can be stabilized, while polarization of the phase reference light cannot be stabilized through feedback; hence, the effect of polarization feedback control is limited. By contrast, in the present disclosure, the polarization state of the phase reference light can also be stabilized at the same time. Thus, the polarization stability of the entire optical path at the Alice terminal 101 and the Bob terminal 102 is effectively ensured.

In an example, the first (second) quantum state preparation module may include a phase modulation unit, an amplitude modulation unit, and a light attenuation unit.

Continuing with reference to Figure 3, the first (second) combined signal light output by the first (second) consistent polarization coupling module can be transmitted to the Charlie terminal 103 by means of a second single-mode or polarization-maintaining optical fiber channel.

Similarly, the polarization state of the first (second) combined signal light may also change when reaching the Charlie terminal 103 through, for example, the second single-mode optical fiber channel. Therefore, two polarization monitoring and compensation modules may be arranged to perform polarization feedback compensation on the first and second combined signal lights (which are in unstable polarization states), respectively, such that the first and second combined signal lights have preset polarization states, to ensure the first and second combined signal lights for the measurement module to be in a stable polarization state.

The polarization monitoring and compensation module for the combined signal light may have a same structure as the polarization monitoring and compensation module in the Alice terminal 101 or the Bob terminal 102 described above, which is therefore not described herein. It should be noted that in the polarization monitoring and compensation module for the combined signal light, the polarization controller for polarization compensation may be arranged in either the Alice terminal 101/Bob terminal 102 or the Charlie terminal 103 (as shown in Figure 3), and the polarization beam splitter and photoelectric detector for polarization monitoring may be arranged at the Charlie terminal 103.

In an example, the two polarization monitoring and compensation modules configured for the combined signal lights may share a photoelectric detector by means of a beam splitter to improve the degree of integration of the system. The beam splitter may be arranged before the photoelectric detector and configured to couple split lights respectively from the first and second combined signal lights into one, so as to detect the two combined signal lights by means of one photoelectric detector.

Further, the Charlie terminal 103 may further include a slow phase compensation module and a fast phase compensation module, where the slow phase compensation module is configured to compensate a slow phase perturbation between the quantum optical signal and the phase reference light in the same combined signal light, and the fast phase compensation module is configured to compensate a fast phase perturbation between the first and second combined signal lights.

In an example, the fast phase compensation module may include a phase modulator.

In an example, the slow phase compensation module may include a polarization-maintaining fifth wavelength division multiplexer and a polarization-maintaining sixth wavelength division multiplexer, each having a common terminal, a first wavelength terminal, and a second wavelength terminal.

The first wavelength terminal of the fifth wavelength division multiplexer is connected to the first wavelength terminal of the sixth wavelength division multiplexer through a first arm, and the second wavelength terminal of the fifth wavelength division multiplexer is connected to the second wavelength terminal of the sixth wavelength division multiplexer through a second arm.

The common terminal of the fifth wavelength division multiplexer is configured to receive the combined signal light, allowing de-multiplexing of the combined signal light and outputting of the quantum optical signal and the phase reference light respectively through the first wavelength terminal and the second wavelength terminal, so that the quantum optical signal and the phase reference light are transmitted to the sixth wavelength division multiplexer respectively along the first and second arms.

A phase shifter may be arranged at least one of the first and second arms to perform phase compensation between the quantum optical signal and the phase reference light.

The quantum optical signal and the phase reference light enter the sixth wavelength division multiplexer through the first wavelength terminal and second wavelength terminal respectively, and are wavelength-division-coupled in a polarization-maintaining manner to form a combined signal light again. In this case, the slow phase perturbation between the quantum optical signal and the phase reference light in the combined signal light can be compensated by means of the phase shifter.

Referring to Figure 3, the two combined signal lights subjected to the polarization compensation, slow phase compensation or fast phase compensation ultimately enter the measurement module.

In the measurement module, the first combined signal light and second combined signal light interfere with one another to generate an interference signal, and the interference signal is detected.

In an example, the measurement module may include a polarization-maintaining second beam splitter with a first input terminal and a second input terminal, and a first output terminal and a second output terminal.

The first and second input terminals are respectively configured to receive the first and second combined signal lights, so that the two combined signal lights interfere with one another to generate an interference signal. The interference signal is output through the first output terminal and the second output terminal, and enters a first detecting optical path and a second detecting optical path. Those skilled in the art can understand that the interference signal in this case includes an interference signal of the quantum optical signal and an interference signal of the phase reference light.

At least one of the first and second detecting optical paths is provided with a fourth wavelength division multiplexer to separate the interference signal related to the quantum optical signal from the interference signal related to the phase reference light in the interference signal, so that the interference signal of the quantum optical signal and the interference signal of the phase reference light can be detected separately.

Similarly, the fourth wavelength division multiplexer may have a common terminal, a first wavelength terminal, and a second wavelength terminal. The common terminal is configured to receive the interference signal, the first wavelength terminal is connected to a first photoelectric detector to detect the interference signal of the quantum optical signal, and the second wavelength terminal is connected to a second photoelectric detector to detect the interference signal of the phase reference light.

Therefore, the feedback control of the fast phase compensation module may be performed by using a detection result of the interference signal related to the phase reference light. One part of a detection result of the interference signal related to the quantum optical signal is used for the feedback control of the slow phase compensation module, and another part is used for generating a quantum key.

In view of the above, according to the present disclosure, the frequency-locking reference light and the phase reference light are wavelength-division-coupled by setting the polarization-maintaining wavelength division multiplexer at the Charlie terminal 103. In addition, the consistent polarization coupling module formed by two polarization-maintaining wavelength division multiplexers is set at both the Alice terminal 101 and the Bob terminal 102. In this way, without the participation of EPC and manual intervention, the consistent polarization coupling of the quantum optical signal and the phase reference light can be implemented only by the inherent optical characteristics of the optical device itself, so that the system light path and control process are simplified, the stability of the system is enhanced and integral design of the system is easy to achieve. In addition, the polarization monitoring and compensation module is arranged before the consistent polarization coupling module, ensuring the stability of the light intensities of the frequency-locking reference light for the frequency-locked light source and the phase reference light for the consistent polarization coupling, which is conducive to the implementation of stable frequency-locking effect, the implementation of fast phase compensation at the Charlie terminal 103 and the generation of a quantum key.

Further, the TF-QKD system according to the present disclosure may include N user terminals serving as Alice terminal 101/Bob terminal 102, and an optical switch supporting a 2: N port is arranged at the Charlie terminal 103.

Therefore, two of the N user terminals are selected, by controlling the optical switch supporting the 2: N port, to serve as the Alice terminal 101 and the Bob terminal 102 to form a connection with the Charlie terminal 103.

In another aspect of the present disclosure, a method for stably implementing TF-QKD is provided.

As described above, in order to stably implement the consistent polarization coupling of the quantum optical signal and the phase reference light in the TF-QKD process, the frequency-locking reference light and the phase reference light are wavelength-division-coupled in a polarization-maintaining manner to form a combined reference light by the first wavelength division multiplexer at the Charlie terminal 103.

The Charlie terminal 103 sends the combined reference light to the Alice terminal 101 and the Bob terminal 102. For example, this combined reference light is split into two components which are respectively sent to the Alice terminal 101 and the Bob terminal 102.

At the Alice terminal 101 and the Bob terminal 102, it is preferable to compensate the polarization of the combined reference light by using the polarization monitoring and compensation module, so that the combined reference light has a preset polarization state, which is conducive to stability of the frequency-locking process and the stable generation of the combined signal light, where the combined signal light is formed by performing wavelength-division coupling on the quantum optical signal and the phase reference light in a polarization-maintaining manner.

Subsequently, at the Alice terminal 101 and the Bob terminal 102, the polarization-compensated combined reference light is de-multiplexed in a polarization-maintaining manner to separate the frequency-locking reference light from the phase reference light. The frequency-locking reference light is output to the frequency-locked light source in a polarization-maintaining manner, for the frequency-locked light source to generate an optical signal in a frequency-locking manner, where the wavelength of the optical signal is locked at a wavelength of the frequency-locking reference light. A quantum state is prepared on the optical signal to generate a quantum optical signal.

Thus, at the Alice terminal 101 and the Bob terminal 102, the quantum optical signal and the phase reference light can be wavelength-division-coupled in a polarization-maintaining manner to form a combined signal light. In this case, the quantum optical signal and the phase reference light in the combined signal light have a consistent polarization state, thereby achieving the consistent polarization coupling of the quantum optical signal and the phase reference light. Moreover, the implementation of the consistent polarization coupling does not involve EPC or manual intervention, but only depends on the characteristics of the optical device itself, which is not prone to influence of external environment and thereby ensures high stability.

The Alice terminal 101 and the Bob terminal 102 send the generated combined signal lights to the Charlie terminal 103 respectively, so that the combined signal lights interfere with one another at the Charlie terminal 103, and the TF-QKD process can be implemented by means of the interference signal of the quantum optical signal in the combined signal light.

Preferably, in order to ensure the stability and efficiency of the interferometry process, polarization monitoring and compensation may be performed on the combined signal lights sent from the Alice terminal 101 and the Bob terminal 102 before interferometry, to cause the combined signal light to have a stable preset polarization state. Further, the Charlie terminal 103 may perform slow phase compensation and fast phase compensation on the combined signal lights before the interferometry, so as to eliminate a slow phase perturbation and a fast phase perturbation introduced in various optical signals during the system operation, ensuring the stability and efficiency of the interference process.

In a preferred embodiment, the TF-QKD method may be implemented by means of the TF-QKD system of the present disclosure.

## Claims

1. A TF-QKD system, comprising an Alice terminal (101), a Bob terminal (102) and a Charlie terminal (103), wherein
the Charlie terminal (103) comprises a measurement module, a first wavelength division multiplexer and a first beam-splitting module;
the first wavelength division multiplexer is configured to perform wavelength division coupling on a frequency-locking reference light and a phase reference light in a polarization-maintaining manner to form a combined reference light, wherein the frequency-locking reference light and the phase reference light have different wavelengths;
the first beam-splitting module is configured to split the combined reference light to form two components of combined reference light;
the Alice terminal (101) is configured to receive one of the two components of combined reference light, and send a first combined signal light to the Charlie terminal (103), wherein the Alice terminal (101) comprises a first frequency-locked light source, a first quantum state preparation module and a first consistent polarization coupling module;
the first consistent polarization coupling module is configured to de-multiplex the frequency-locking reference light and the phase reference light in the component of combined reference light, output the frequency-locking reference light to the first frequency-locked light source in a polarization-maintaining manner, and perform wavelength division coupling on a first quantum optical signal and the phase reference light in a polarization-maintaining manner to form the first combined signal light;
the first frequency-locked light source is configured to generate a first optical signal in a frequency-locking manner by using the frequency-locking reference light;
the first quantum state preparation module is configured to prepare a quantum state on the first optical signal to generate the first quantum optical signal;
the Bob terminal (102) is configured to receive another one of the two combined reference light components, and send a second combined signal light to the Charlie terminal (103), wherein the Bob terminal (102) comprises a second frequency-locked light source, a second quantum state preparation module and a second consistent polarization coupling module;
the second consistent polarization coupling module is configured to de-multiplex the frequency-locking reference light and the phase reference light in the component of combined reference light, output the frequency-locking reference light to the second frequency-locked light source in a polarization-maintaining manner, and perform wavelength division coupling on a second quantum optical signal and the phase reference light in a polarization-maintaining manner to form the second combined signal light;
the second frequency-locked light source is configured to generate a second optical signal in a frequency-locking manner by using the frequency-locking reference light;
the second quantum state preparation module is configured to prepare a quantum state on the second optical signal to generate the second quantum optical signal; and
the measurement module is configured to measure an interference signal of the first and second quantum optical signals.

2. The TF-QKD system according to claim 1, wherein the consistent polarization coupling module comprises two polarization-maintaining wavelength division multiplexers;
one of the two polarization-maintaining wavelength division multiplexers is configured to de-multiplex the frequency-locking reference light and the phase reference light in the component of combined reference light, and output the frequency-locking reference light and the phase reference light respectively to the frequency-locked light source and another one of the two polarization-maintaining wavelength division multiplexers in a polarization-maintaining manner; and
the another one of the two polarization-maintaining wavelength division multiplexers is configured to perform wavelength division coupling on the phase reference light and the quantum optical signal in a polarization-maintaining manner to generate the combined signal light.

3. The TF-QKD system according to claim 1, wherein at least one of the Alice terminal (101) and the Bob terminal (102) further comprises a polarization monitoring and compensation module arranged before the consistent polarization coupling module and configured to compensate a polarization state of the combined reference light to cause the combined reference light to be in a preset polarization state.

4. The TF-QKD system according to claim 3, wherein the polarization monitoring and compensation module comprises a polarization controller, a polarization beam splitter and a photoelectric detector.

5. The TF-QKD system according to claim 1, further comprising two polarization monitoring and compensation modules respectively configured to compensate polarization states of the first and second combined signal lights.

6. The TF-QKD system according to claim 5, wherein
a first one of the two polarization monitoring and compensation modules comprises a polarization controller, a polarization beam splitter and a photoelectric detector, wherein the polarization controller is arranged at the Alice terminal (101) or the Charlie terminal (103), and the polarization beam splitter and the photoelectric detector are arranged at the Charlie terminal (103); and
a second one of the two polarization monitoring and compensation modules comprises a polarization controller, a polarization beam splitter and a photoelectric detector, wherein the polarization controller is arranged at the Bob terminal (102) or the Charlie terminal (103), and the polarization beam splitter and the photoelectric detector are arranged at the Charlie terminal (103).

7. The TF-QKD system according to claim 6, wherein the two polarization monitoring and compensation modules share the photoelectric detector through a beam splitter.

8. The TF-QKD system according to claim 1, wherein the Charlie terminal (103) further comprises a frequency-locking reference light source for generating the frequency-locking reference light, and a phase reference light source for generating the phase reference light; and/or,
the Charlie terminal (103) further comprises a slow phase compensation module and/or a fast phase compensation module, the slow phase compensation module is configured to compensate a phase perturbation between the quantum optical signal and the phase reference light in the combined signal light, and the fast phase compensation module is configured to compensate a phase perturbation between the first combined signal light and the second combined signal light.

9. The TF-QKD system according to claim 1, wherein the frequency-locked light source generates the optical signal by using the frequency-locking reference light based on injection locking, an optical phase-locked loop, or time-frequency dissemination.

10. The TF-QKD system according to claim 1, wherein a total number of Alice terminals (101) and Bob terminals (102) is N, wherein N is a positive integer greater than 1; and
the Charlie terminal (103) is further provided with an optical switch supporting a 2:N port for selecting the Alice terminal (101) and/or the Bob terminal (102) to be connected.

11. A method for stably implementing TF-QKD, comprising:
at a Charlie terminal (103), performing wavelength division multiplexing on a frequency-locking reference light and a phase reference light by a polarization-maintaining wavelength division multiplexer, to form a combined reference light;
at an Alice terminal (101) and a Bob terminal (102), de-multiplexing the frequency-locking reference light and the phase reference light in the combined reference light and outputting the frequency-locking reference light to a frequency-locked light source in a polarization-maintaining manner, by a polarization-maintaining wavelength division multiplexer;
at the Alice terminal (101) and the Bob terminal (102), generating, by the frequency-locked light source, an optical signal in a frequency-locking manner by using the frequency-locking reference light, preparing a quantum optical signal by using the optical signal, and outputting the quantum optical signal in a polarization-maintaining manner;
at the Alice terminal (101) and the Bob terminal (102), performing, by another polarization-maintaining wavelength division multiplexer, wavelength division coupling on the phase reference light and the quantum optical signal, to form a combined signal light; and
at the Charlie terminal (103), controlling quantum optical signals respectively from the Alice terminal (101) and the Bob terminal (102) to interfere with one another to generate an interference signal and measuring the interference signal.

12. The method for stably implementing TF-QKD according to claim 11, further comprising:
at the Alice terminal (101) and Bob terminal (102), performing polarization compensation on the combined reference light and outputting the combined reference light in a polarization-maintaining manner before de-multiplexing the combined reference light; and/or,
performing polarization compensation on the quantum optical signals and outputting the quantum optical signals in a polarization-maintaining manner before controlling the quantum optical signals to interfere with one another.

13. The method for stably implementing TF-QKD according to claim 11, further comprising the step of: at the Charlie terminal (103), performing a slow phase compensation and/or a fast phase compensation on the combined signal light.

14. The method for stably implementing TF-QKD according to claim 11, wherein the method is implemented by means of the TF-QKD system according to any one of claims 1 to 10.

## Patentansprüche

1. Ein TF-QKD-System, umfassend ein Alice-Terminal (101), ein Bob-Terminal (102) und ein Charlie-Terminal (103), wobei
das Charlie-Terminal (103) ein Messmodul, einen ersten Wellenlängenmultiplexer und ein erstes Strahlteilermodul umfasst;
der erste Wellenlängenmultiplexer so konfiguriert ist, dass er eine Wellenlängenzusammenführung eines frequenzgekoppelten Referenzlichts und eines Phasenreferenzlichts in einer polarisationserhaltenden Weise durchführt, um ein kombiniertes Referenzlicht zu bilden, wobei das frequenzgekoppelte Referenzlicht und das Phasenreferenzlicht unterschiedliche Wellenlängen aufweisen;
das erste Strahlteilermodul so konfiguriert ist, dass es das kombinierte Referenzlicht teilt, um zwei Komponenten des kombinierten Referenzlichts zu bilden;
das Alice-Terminal (101) so konfiguriert ist, dass es eine der beiden Komponenten des kombinierten Referenzlichts empfängt und ein erstes kombiniertes Signallicht an das Charlie-Terminal (103) sendet, wobei das Alice-Terminal (101) eine erste frequenzgekoppelte Lichtquelle, ein erstes Quantenzustandsvorbereitungsmodul und ein erstes polarisationskonsistentes Kopplungsmodul umfasst;
das erste polarisationskonsistente Kopplungsmodul so konfiguriert ist, dass es das frequenzgekoppelte Referenzlicht und das Phasenreferenzlicht in der Komponente des kombinierten Referenzlichts demultiplext, das frequenzgekoppelte Referenzlicht in polarisationserhaltender Weise an die erste frequenzgekoppelte Lichtquelle ausgibt und eine Wellenlängenzusammenftihrung an einem ersten quantenoptischen Signal und dem Phasenreferenzlicht in polarisationserhaltender Weise durchführt, um das erste kombinierte Signallicht zu bilden;
die erste frequenzgekoppelte Lichtquelle so konfiguriert ist, dass sie unter Verwendung des frequenzgekoppelten Referenzlichts ein erstes optisches Signal frequenzgekoppelt erzeugt;
das erste Quantenzustandsvorbereitungsmodul so konfiguriert ist, dass es einen Quantenzustand auf dem ersten optischen Signal vorbereitet, um das erste quantenoptische Signal zu erzeugen;
das Bob-Terminal (102) so konfiguriert ist, dass es eine weitere der beiden kombinierten Referenzlichtkomponenten empfängt und ein zweites kombiniertes Signallicht an das Charlie-Terminal (103) sendet, wobei das Bob-Terminal (102) eine zweite frequenzgekoppelte Lichtquelle, ein zweites Quantenzustandsvorbereitungsmodul und ein zweites polarisationskonsistentes Kopplungsmodul umfasst;
das zweite polarisationskonsistente Kopplungsmodul so konfiguriert ist, dass es das frequenzgekoppelte Referenzlicht und das Phasenreferenzlicht in der Komponente des kombinierten Referenzlichts demultiplext, das frequenzgekoppelte Referenzlicht in polarisationserhaltender Weise an die zweite frequenzgkoppelte Lichtquelle ausgibt und eine Wellenlängenzusammenführung an einem zweiten quantenoptischen Signal und dem Phasenreferenzlicht in polarisationserhaltender Weise durchführt, um das zweite kombinierte Signallicht zu bilden;
die zweite frequenzgekoppelte Lichtquelle so konfiguriert ist, dass sie unter Verwendung des frequenzgekoppelten Referenzlichts ein zweites optisches Signal frequenzgekoppelt erzeugt;
das zweite Quantenzustandsvorbereitungsmodul so konfiguriert ist, dass es einen Quantenzustand auf dem zweiten optischen Signal vorbereitet, um das zweite quantenoptische Signal zu erzeugen; und
das Messmodul so konfiguriert ist, dass es ein Interferenzsignal des ersten und zweiten quantenoptischen Signals misst.

2. TF-QKD-System nach Anspruch 1, wobei das polarisationskonsistente Kopplungsmodul zwei polarisationserhaltende Wellenlängenmultiplexer umfasst;
einer der beiden polarisationserhaltenden Wellenlängenmultiplexer so konfiguriert ist, dass er das frequenzgekoppelte Referenzlicht und das Phasenreferenzlicht in der Komponente des kombinierten Referenzlichts demultiplext und das frequenzgekoppelte Referenzlicht und das Phasenreferenzlicht jeweils an die frequenzgekoppelte Lichtquelle und einen anderen der beiden polarisationserhaltenden Wellenlängenmultiplexer in polarisationserhaltender Weise ausgibt; und
der andere der beiden polarisationserhaltenden Wellenlängenmultiplexer so konfiguriert ist, dass er eine Wellenlängenzusammenftihrung des Phasenreferenzlichts und des quantenoptischen Signals auf polarisationserhaltende Weise durchführt, um das kombinierte Signallicht zu erzeugen.

3. TF-QKD-System nach Anspruch 1, wobei mindestens eines der Alice (101) und Bob-(102) Terminale ferner ein Polarisationsüberwachungs- und -kompensationsmodul umfasst, das vor dem polarisationskonsistenten Kopplungsmodul angeordnet und so konfiguriert ist, dass es einen Polarisationszustand des kombinierten Referenzlichts kompensiert, um zu bewirken, dass sich das kombinierte Referenzlicht in einem voreingestellten Polarisationszustand befindet.

4. TF-QKD-System nach Anspruch 3, wobei das Polarisationsüberwachungs- und -kompensationsmodul einen Polarisationsregler, einen Polarisationsstrahlteiler und einen photoelektrischen Detektor umfasst.

5. TF-QKD-System nach Anspruch 1, das ferner zwei Polarisationsüberwachungs- und -kompensationsmodule umfasst, die jeweils so konfiguriert sind, dass sie die Polarisationszustände des ersten und des zweiten kombinierten Signallichts kompensieren.

6. TF-QKD-System nach Anspruch 5, wobei
ein erstes der beiden Polarisationsüberwachungs- und -kompensationsmodule einen Polarisationsregler, einen Polarisationsstrahlteiler und einen photoelektrischen Detektor umfasst, wobei der Polarisationsregler am Alice-Terminal (101) oder am Charlie-Terminal (103) angeordnet ist und der Polarisationsstrahlteiler und der photoelektrische Detektor am Charlie-Terminal (103) angeordnet sind; und
ein zweites der beiden Polarisationsüberwachungs- und -kompensationsmodule einen Polarisationsregler, einen Polarisationsstrahlteiler und einen fotoelektrischen Detektor umfasst, wobei der Polarisationsregler am Bob-Terminal (102) oder am Charlie-Terminal (103) angeordnet ist und der Polarisationsstrahlteiler und der fotoelektrische Detektor am Charlie-Terminal (103) angeordnet sind.

7. TF-QKD-System nach Anspruch 6, wobei die beiden Polarisationsüberwachungs- und -kompensationsmodule sich den photoelektrischen Detektor über einen Strahlteiler teilen.

8. TF-QKD-System nach Anspruch 1, wobei das Charlie-Terminal (103) ferner eine frequenzgekoppelte Referenzlichtquelle zum Erzeugen des frequenzgekoppelten Referenzlichts und eine Phasenreferenzlichtquelle zum Erzeugen des Phasenreferenzlichts umfasst; und/oder
das Charlie-Terminal (103) ferner ein langsames Phasenkompensationsmodul und/oder ein schnelles Phasenkompensationsmodul umfasst, wobei das langsame Phasenkompensationsmodul so konfiguriert ist, dass es eine Phasenstörung zwischen dem quantenoptischen Signal und dem Phasenreferenzlicht im kombinierten Signallicht kompensiert, und das schnelle Phasenkompensationsmodul so konfiguriert ist, dass es eine Phasenstörung zwischen dem ersten kombinierten Signallicht und dem zweiten kombinierten Signallicht kompensiert.

9. TF-QKD-System nach Anspruch 1, wobei die frequenzgekoppelte Lichtquelle das optische Signal unter Verwendung des frequenzgekoppelten Referenzlichts auf der Grundlage einer Injektionskopplung, einer optischen Phasenregelschleife oder einer Zeit-Frequenz-Verbreitung erzeugt.

10. TF-QKD-System nach Anspruch 1, wobei die Gesamtzahl der Alice-Terminals (101) und Bob-Terminals (102) N beträgt, wobei N eine positive ganze Zahl grösser als 1 ist; und
das Charlie-Terminal (103) ferner mit einem optischen Schalter ausgestattet ist, der einen 2:N-Port unterstützt, um das Alice-Terminal (101) und/oder das Bob-Terminal (102) zur Verbindung auszuwählen.

11. Verfahren zur stabilen Implementierung von TF-QKD, umfassend:
an einem Charlie-Terminal (103) Durchführen einer Wellenlängenzusammenführung an einem frequenzgekoppeltem Referenzlicht und einem Phasenreferenzlicht durch einen polarisationserhaltenden Wellenlängenmultiplexer, um ein kombiniertes Referenzlicht zu bilden;
an einem Alice-Terminal (101) und einem Bob-Terminal (102) Demultiplexen des frequenzgekoppelten Referenzlichts und des Phasenreferenzlichts in dem kombinierten Referenzlicht und das Ausgeben des frequenzgekoppelten Referenzlichts an eine frequenzgekoppelte Lichtquelle in einer polarisationserhaltenden Weise durch einen polarisationserhaltenden Wellenlängenmultiplexer;
am Alice-Terminal (101) und am Bob-Terminal (102) unter Verwendung der frequenzgekoppelten Referenzlichtquelle Erzeugen eines optisches Signal in frequenzgekoppelter Weise, unter Verwendung des optischen Signals Vorbereiten eines quantenoptisches Signals und Ausgeben des quantenoptischen Signals in polarisationserhaltender Weise;
am Alice-Terminal (101) und am Bob-Terminal (102) mit einem weiteren polarisationserhaltenden Wellenlängenmultiplexer Durchführen einer Wellenlängenkopplung des Phasenreferenzlichts und des quantenoptischen Signals, um ein kombiniertes Signallicht zu bilden; und
am Charlie-Terminal (103) Steuerung der Quantenoptiksignale vom Alice-Terminal (101) und vom Bob-Terminal (102) so, dass sie miteinander interferieren, um ein Interferenzsignal zu erzeugen, und Messen des Interferenzsignals.

12. Verfahren zur stabilen Implementierung von TF-QKD gemäss Anspruch 11, das ferner umfasst:
am Alice-Terminal (101) und am Bob-Terminal (102) Durchführen einer Polarisationskompensation an dem kombinierten Referenzlicht und Ausgeben des kombinierten Referenzlichts in einer polarisationserhaltenden Weise vor dem Demultiplexen des kombinierten Referenzlichts; und/oder
Durchführen einer Polarisationskompensation an den quantenoptischen Signalen und Ausgeben der quantenoptischen Signale in einer polarisationserhaltenden Weise, bevor die quantenoptischen Signale so gesteuert werden, dass sie miteinander interferieren.

13. Verfahren zur stabilen Implementierung von TF-QKD gemäss Anspruch 11, das ferner den folgenden Schritt umfasst: am Charlie-Terminal (103) Durchführen einer langsame Phasenkompensation und/oder eine schnelle Phasenkompensation an dem kombinierten Signallicht.

14. Verfahren zur stabilen Implementierung von TF-QKD gemäss Anspruch 11, wobei das Verfahren mittels des TF-QKD-Systems gemäss einem der Ansprüche 1 bis 10 implementiert wird.

## Revendications

1. Système TF-QKD, comprenant un terminal Alice (101), un terminal Bob (102) et un terminal Charlie (103), dans lequel
le terminal Charlie (103) comprend un module de mesure, un premier multiplexeur de longueur d'onde et un premier module de séparation de faisceau ;
le premier multiplexeur de longueur d'onde est configuré pour effectuer un couplage de longueur d'onde sur une lumière de référence à fréquence verrouillée et une lumière de référence de phase de manière à maintenir la polarisation afin de former une lumière de référence combinée, la lumière de référence à fréquence verrouillée et la lumière de référence de phase ayant des longueurs d'onde différentes ;
le premier module de séparation de faisceau est configuré pour séparer la lumière de référence combinée afin de former deux composantes de lumière de référence combinée ;
le terminal Alice (101) est configuré pour recevoir l'une des deux composantes de la lumière de référence combinée et envoyer un premier signal lumineux combiné au terminal Charlie (103), le terminal Alice (101) comprenant une première source lumineuse à fréquence verrouillée, un premier module de préparation d'état quantique et un premier module de couplage à polarisation consistante ;
le premier module de couplage à polarisation consistante est configuré pour démultiplexer la lumière de référence à fréquence verrouillée et la lumière de référence de phase dans la composante de lumière de référence combinée, émettre la lumière de référence à fréquence verrouillée vers la première source lumineuse à fréquence verrouillée de manière à maintenir la polarisation, et effectuer un couplage de longueur d'onde sur un premier signal optique quantique et la lumière de référence de phase de manière à maintenir la polarisation afin de former la première lumière de signal combinée ;
la première source de lumière à fréquence verrouillée est configurée pour générer un premier signal optique de manière verrouillée en fréquence en utilisant la lumière de référence à fréquence verrouillée ;
le premier module de préparation d'état quantique est configuré pour préparer un état quantique sur le premier signal optique afin de générer le premier signal optique quantique ;
le terminal Bob (102) est configuré pour recevoir une autre des deux composantes de lumière de référence combinées et envoyer un deuxième signal lumineux combiné au terminal Charlie (103), le terminal Bob (102) comprenant une deuxième source lumineuse à fréquence verrouillée, un deuxième module de préparation d'état quantique et un deuxième module de couplage à polarisation consistante ;
le deuxième module de couplage à polarisation consistante est configuré pour démultiplexer la lumière de référence à fréquence verrouillée et la lumière de référence de phase dans la composante de lumière de référence combinée, émettre la lumière de référence à fréquence verrouillée vers la deuxième source lumineuse à fréquence verrouillée de manière à maintenir la polarisation, et effectuer un couplage de longueur d'onde sur un deuxième signal optique quantique et la lumière de référence de phase de manière à maintenir la polarisation afin de former la deuxième lumière de signal combinée ;
la deuxième source lumineuse à fréquence verrouillée est configurée pour générer un deuxième signal optique de manière verrouillée en fréquence en utilisant la lumière de référence à fréquence verrouillée ;
le deuxième module de préparation d'état quantique est configuré pour préparer un état quantique sur le deuxième signal optique afin de générer le deuxième signal optique quantique ; et
le module de mesure est configuré pour mesurer un signal d'interférence des premier et deuxième signaux optiques quantiques.

2. Système TF-QKD selon la revendication 1, dans lequel le module de couplage à polarisation consistante comprend deux multiplexeurs de longueur d'onde à maintien de polarisation ;
l'un des deux multiplexeurs de longueur d'onde à maintien de polarisation étant configuré pour démultiplexer la lumière de référence à fréquence verrouillée et la lumière de référence de phase dans la composante de lumière de référence combinée, et pour émettre la lumière de référence à fréquence verrouillée et la lumière de référence de phase respectivement vers la source de lumière à fréquence verrouillée et un autre des deux multiplexeurs de longueur d'onde à maintien de polarisation en maintenant la polarisation ; et
l'autre des deux multiplexeurs de longueur d'onde à maintien de polarisation étant configuré pour effectuer un couplage de longueur d'onde sur la lumière de référence de phase et le signal optique quantique en maintenant la polarisation afin de générer la lumière de signal combinée.

3. Système TF-QKD selon la revendication 1, dans lequel au moins l'un des terminaux Alice (101) et Bob (102) comprend en outre un module de surveillance et de compensation de polarisation disposé avant le module de couplage à polarisation consistante et configuré pour compenser un état de polarisation de la lumière de référence combinée afin d'amener la lumière de référence combinée dans un état de polarisation prédéfini.

4. Système TF-QKD selon la revendication 3, dans lequel le module de surveillance et de compensation de polarisation comprend un contrôleur de polarisation, un séparateur de faisceau polarisant et un détecteur photoélectrique.

5. Système TF-QKD selon la revendication 1, comprenant en outre deux modules de surveillance et de compensation de polarisation configurés respectivement pour compenser les états de polarisation des première et deuxième lumières de signal combinées.

6. Système TF-QKD selon la revendication 5, dans lequel
un premier des deux modules de surveillance et de compensation de polarisation comprend un contrôleur de polarisation, un séparateur de faisceau polarisant et un détecteur photoélectrique, dans lequel le contrôleur de polarisation est disposé au niveau du terminal Alice (101) ou du terminal Charlie (103), et le séparateur de faisceau polarisant et le détecteur photoélectrique sont disposés au niveau du terminal Charlie (103) ; et
un deuxième des deux modules de surveillance et de compensation de polarisation comprend un contrôleur de polarisation, un séparateur de faisceau de polarisation et un détecteur photoélectrique, dans lequel le contrôleur de polarisation est disposé au niveau du terminal Bob (102) ou du terminal Charlie (103), et le séparateur de faisceau polarisant et le détecteur photoélectrique sont disposés au niveau du terminal Charlie (103).

7. Système TF-QKD selon la revendication 6, dans lequel les deux modules de surveillance et de compensation de polarisation partagent le détecteur photoélectrique par l'intermédiaire d'un séparateur de faisceau.

8. Système TF-QKD selon la revendication 1, dans lequel le terminal Charlie (103) comprend en outre une source lumineuse de référence à fréquence verrouillée pour générer la lumière de référence à fréquence verrouillée, et une source lumineuse de référence de phase pour générer la lumière de référence de phase ; et/ou,
le terminal Charlie (103) comprend en outre un module de compensation de phase lente et/ou un module de compensation de phase rapide, le module de compensation de phase lente étant configuré pour compenser une perturbation de phase entre le signal optique quantique et la lumière de référence de phase dans la lumière de signal combinée, et le module de compensation de phase rapide étant configuré pour compenser une perturbation de phase entre la première lumière de signal combinée et la deuxième lumière de signal combinée.

9. Système TF-QKD selon la revendication 1, dans lequel la source de lumière à fréquence verrouillée génère le signal optique en utilisant la lumière de référence à fréquence verrouillée sur la base d'un verrouillage d' s d'injection, d'une boucle à verrouillage de phase optique ou d'une diffusion temps-fréquence.

10. Système TF-QKD selon la revendication 1, dans lequel le nombre total de terminaux Alice (101) et de terminaux Bob (102) est N, N étant un nombre entier positif supérieur à 1 ; et
le terminal Charlie (103) est en outre équipé d'un commutateur optique soutenant un port 2:N pour sélectionner le terminal Alice (101) et/ou le terminal Bob (102) à connecter.

11. Procédé pour mettre en œuvre de manière stable le TF-QKD, comprenant :
au niveau d'un terminal Charlie (103), effectuer un multiplexage par répartition en longueur d'onde sur une lumière de référence à fréquence verrouillée et une lumière de référence de phase à l'aide d'un multiplexeur de longueur d'onde à maintien de polarisation, afin de former une lumière de référence combinée ;
au niveau d'un terminal Alice (101) et d'un terminal Bob (102), démultiplexer la lumière de référence à fréquence verrouillée et la lumière de référence de phase dans la lumière de référence combinée et délivrer la lumière de référence à fréquence verrouillée à une source lumineuse à fréquence verrouillée de manière à maintenir la polarisation, à l'aide d'un multiplexeur de longueur d'onde à maintien de polarisation ;
au niveau du terminal Alice (101) et du terminal Bob (102), générer, à l'aide de la source lumineuse à fréquence verrouillée, un signal optique de manière verrouillée en fréquence en utilisant la lumière de référence à fréquence verrouillée, préparer un signal optique quantique en utilisant le signal optique, et émettre le signal optique quantique en maintenant la polarisation ;
au niveau du terminal Alice (101) et du terminal Bob (102), effectuer, à l'aide d'un autre multiplexeur de longueur d'onde à maintien de polarisation, un couplage de longueur d'onde sur la lumière de référence de phase et le signal optique quantique, afin de former une lumière de signal combinée ; et
au niveau du terminal Charlie (103), contrôler les signaux optiques quantiques provenant respectivement du terminal Alice (101) et du terminal Bob (102) afin qu'ils interfèrent les uns avec les autres pour générer un signal d'interférence et mesurer le signal d'interférence.

12. Procédé pour mettre en œuvre de manière stable le TF-QKD selon la revendication 11, comprenant en outre :
au niveau du terminal Alice (101) et du terminal Bob (102), effectuer une compensation de polarisation sur la lumière de référence combinée et émettre la lumière de référence combinée de manière à maintenir la polarisation avant de démultiplexer la lumière de référence combinée ; et/ou,
effectuer une compensation de polarisation sur les signaux optiques quantiques et émettre les signaux optiques quantiques de manière à maintenir la polarisation avant de contrôler les signaux optiques quantiques afin qu'ils interfèrent les uns avec les autres.

13. Procédé pour mettre en œuvre de manière stable le TF-QKD selon la revendication 11, comprenant en outre l'étape consistant à : au niveau du terminal Charlie (103), effectuer une compensation de phase lente et/ou une compensation de phase rapide sur la lumière de signal combiné.

14. Procédé pour mettre en œuvre de manière stable le TF-QKD selon la revendication 11, dans lequel le procédé est mis en œuvre au moyen du système TF-QKD selon l'une quelconque des revendications 1 à 10.
